# EUROPEAN PATENT APPLICATION

(11) **EP 3 528 168 A1**
(43) Date of publication of application: **21.08.2019**
(21) Application number: 18305174.7
(22) Date of filing: 20.02.2018
(51) Int. Cl.: G06K 9/00, G06K 9/46

(54) **A METHOD FOR IDENTIFYING AT LEAST ONE MARKER ON IMAGES OBTAINED BY A CAMERA, AND CORRESPONDING DEVICE, SYSTEM AND COMPUTER PROGRAM**

(71) Applicant: THOMSON LICENSING, 92130 Issy les Moulineaux (FR)
(72) Inventor: ALLEAUME, Vincent, 35576 Cesson-Sévigné (FR); SERVANT, Fabien, 35576 Cesson-Sévigné (FR); FRADET, Matthieu, 35576 Cesson-Sévigné (FR)
(74) Representative: Huchet, Anne

(57) **Abstract**

The disclosure relates to a method, device, system and computer program for identifying at least one marker on images obtained by a camera, said at least one marker comprising light sources and said camera having a shutter time, comprising:
- estimating (21) a pose of the camera,
- determining (22) at least one adjustment parameter among at least one of the shutter time and a light power intensity of at least one of said light sources, from the pose estimate,
- identifying (23) said at least one marker on at least one image obtained by said camera after adjusting at least one of the shutter time and the light power intensity according to said at least one adjustment parameter.

## Description

### 1. Technical field

The present disclosure relates to the field of images processing.

More specifically, the present disclosure offers a technique for the detection or identification of light-based markers in images obtained by a camera. Such markers can be used to estimate a pose of the camera.

The present disclosure is thus particularly adapted to any applications in which a pose of the camera is estimated, for example virtual or augmented reality applications.

### 2. Background art

This section is intended to introduce the reader to various aspects of art, which may be related to various aspects of the present disclosure that are described and/or claimed below. This discussion is believed to be helpful in providing the reader with background information to facilitate a better understanding of the various aspects of the present disclosure. Accordingly, it is understood that these statements are to be read in this light, and not as admissions of prior art.

We describe below the use of markers and camera in the field of virtual or augmented reality applications. The invention is of course not limited to this particular field of applications, but is of interest in any technique having to identify at least one marker in images obtained by a camera.

Known techniques rely on the use of markers to estimate the pose of a camera, i.e. the position and orientation of the camera with respect to the marker.

The marker can be selected to be adapted to the underlying tracking algorithm. Its properties are known and enable full 6-dof pose estimation.

More specifically, a marker is a pattern selected to avoid confusion with other scene objects. Geometry of the marker is known *a priori.* It is possible to do a one to one mapping between image structures (in images captured by the camera) and their associated 3D geometry (in the real world). This association can be used to estimate the measuring camera's pose.

There is a need for a new technique for identifying at least one marker on images obtained by a camera that overcome at least one of the known techniques' drawbacks.

### 3. Summary

The present disclosure relates to a method for identifying at least one marker on images obtained by a camera, said at least one marker comprising light sources and said camera having a shutter time, wherein said method comprises:
- estimating a pose of the camera,
- determining at least one adjustment parameter among at least one of the shutter time and a light power intensity of at least one of said light sources, from the pose estimate,
- identifying said at least one marker on at least one image obtained by said camera after adjusting at least one of the shutter time and the light power intensity according to said at least one adjustment parameter.

### 4. Brief description of the drawings

The disclosure will be better understood and illustrated by means of the following embodiment and execution examples, in no way limitative, with reference to the appended figures in which:
- Figure 1 illustrates a system comprising a first apparatus and a second apparatus according to an embodiment of the disclosure;
- Figure 2 is a flow chart illustrating the main steps of a method for identifying at least one light-based marker in images captured by a camera according to an embodiment of the disclosure;
- Figure 3 is a block diagram of a device implementing the method for identifying at least one light-based marker in images captured by a camera according to Figure 2.

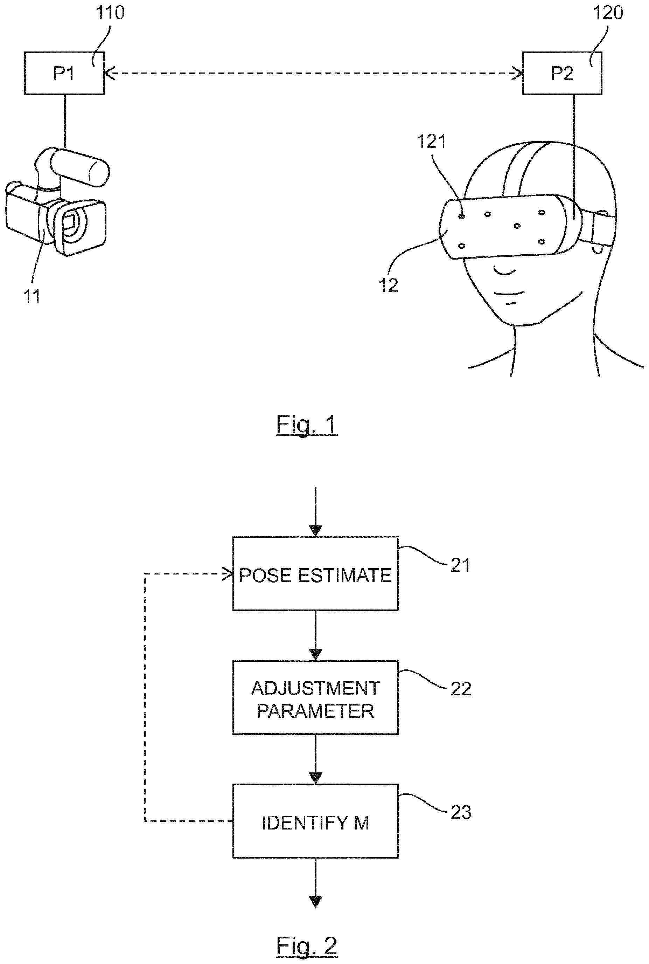

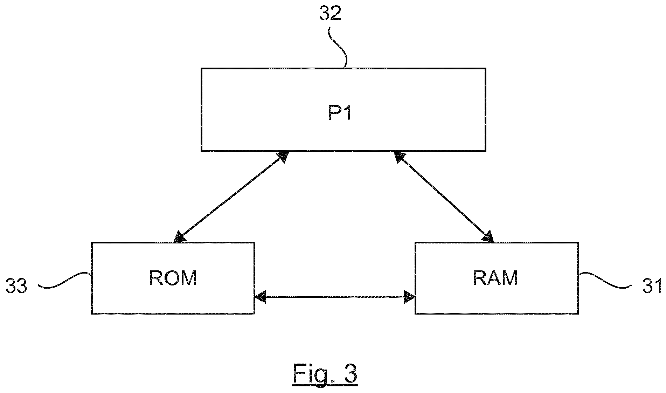

In Figures 2 and 3, the represented blocks are purely functional entities, which do not necessarily correspond to physically separate entities. Namely, they could be developed in the form of software, hardware, or be implemented in one or several integrated circuits, comprising one or more processors.

### 5. Description of embodiments

It is to be understood that the figures and descriptions of the present disclosure have been simplified to illustrate elements that are relevant for a clear understanding of the present disclosure, while eliminating, for purposes of clarity, many other elements found in typical mobile apparatuses.

The present disclosure proposes a new technique for identifying at least one light-based marker on images obtained by a camera. According to the disclosure, the light-based marker comprises light sources, for example LEDs, each having a position and power intensity in the marker.

According to at least one embodiment of the disclosure, at least one of:
- the shutter time of the camera and
- the light power intensity of at least one light source of the marker is adjusted before identifying the marker. In this way, it is possible to limit the size of the blobs in the images captured by the camera, and then to accurately identify the marker in the images captured by the camera.

It is noted that the more accurate the identification of the marker is, the better will be the estimation of the pose of the camera. A better estimation of the pose of the camera also leads, in the field of virtual or augmented reality applications for example, an improved experience of the user.

In particular, the present disclosure offers a solution that is adapted to dynamic scene, as the adjustment parameter(s) can be updated / refined from the better pose estimate.

The present disclosure thus provides, according to at least one embodiment, a solution to relax conditions on the environment.

Let's for example consider the system illustrated in Figure 1, comprising a first apparatus and a second apparatus. The first and second apparatuses are mobile relative to each other.

The first apparatus comprises a camera *C* 11. The scene is observed by the camera 11, which is attached to a geometric frame 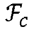 . For example, 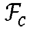 defines a reference system (for example a Cartesian system) attached to the camera. A processing unit *P*1 110 is connected to the camera 11.

The second apparatus comprises at least one light-based marker *M* 12. For example, the second apparatus is a head-mounted display. Such marker comprises several light sources, for example light emitting diodes (LEDs), placed in a non-symmetric pattern. The marker 12 comprises light sources 121, each light source being denoted as *lᵢ*, *lᵢ* E *L*. In particular, the LEDs of the marker can be chosen to emit in infra-red (IR) or near-IR spectrum. As only few sources are emitting in this spectrum, the detection of LEDs in images captured by the camera is thus easier. A power supply, for example a programmable DC power supply, provides power to the light sources 121. The marker 12 is considered to be a rigid body, that keeps its shape (i.e. is not deformable) along the time. Such marker 12 is not attached to the geometric frame 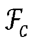 . For example, 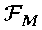 defines a reference system (for example a Cartesian system) attached to the marker 121. A processing unit *P*2 120 is connected to the marker 12.

The processing units *P*1 110 and *P*2 120 can be connected to exchange data, for example through a wireless network.

**Figure 2** illustrates the main steps of a method for identifying at least one light-based marker in images of the camera according to at least one embodiment of the disclosure.

According to at least one embodiment, such method implements at least one iteration of the following acts:
- estimating a pose of the camera,
- determining at least one adjustment parameter among at least one of the shutter time and a light power intensity of at least one of said light sources, from the pose estimate,
- identifying said at least one marker on at least one image obtained by said camera after adjusting at least one of the shutter time and the light power intensity according to said at least one adjustment parameter.

More specifically, a (next) pose of the camera is first estimated in block 21.

For example, such pose estimate is the transformation matrix *^{C}T'_{M}* which relates the marker reference system 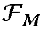 and the camera system 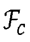 at a next time.

According to at least one embodiment, the camera's pose estimation implemented in block 21 comprises:
- obtaining at least one previous pose of the camera (which can comprise the pose of the camera at a current time);
- predicting the movement of the camera with respect to said at least one marker,
- estimating the pose of the camera from the predicted movement and said at least one previous pose.

For example, referring again to Figure 1, at least one image previously captured by the camera 11 is processed, for example by the processor *P*1 110, to detect at least one blob *B*. As the geometry of the marker 12 is known *a priori,* it is possible to estimate the camera's pose by mapping the blobs detected in the images previously captured by the camera 11 and the light sources of the marker 12. Such technique can be implemented to estimate a current or previous pose of the camera.

For example, such previous pose estimate is the transformation matrix *^{C}T_{M}* which relates the marker reference system 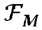 and the camera system 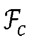 at a previous time or a current time.

Once at least one previous pose of the camera is obtained, the movement of the camera with respect to the light-based marker is predicted.

For example, the predicted movement is predicted from at least two previous poses of the camera at respective distinct times (which can comprise the pose of the camera at the current time). In this case, a mathematical model can be used to predict the next movement of the camera with respect to the light-based marker. For instance, a constant velocity, constant rotation speed prediction is performed to predict the movement of the camera with respect to the light-based marker.

According to another example, the predicted movement is predicted from data collected by at least one inertial sensor. Such inertial sensor can either equip the camera or the marker. In this case, a measure of the movement can be used to predict the next movement of the camera with respect to the light-based marker.

A pose of the camera, at a next time, can thus be estimated from the predicted movement and said at least one previous pose (which can comprise the pose of the camera at the current time).

For example, in the context where the camera 11 is static and the marker 12 is moving, an inertial sensor can be provided with the marker rigid body. Using the last known pose and assuming the camera has known vertical orientation with respect to earth gravity, one can predict the next pose of the marker with respect to the camera, or respectively the next pose of the camera with respect to the marker.

Referring to Figure 2, at least one adjustment parameter among at least one of:
- the shutter time of the camera and
- a light power intensity of at least one of the light sources of the marker
is determined in block 22, from the (next) pose estimate obtained from block 21.

For example, the at least one adjustment parameter is determined from a mapping between poses of the camera and adjustment parameters. Such mapping is for example a lookup table, linking poses of the camera with values of the shutter time of the camera and light power intensity of the light sources of the marker.

Such mapping can be generated / learnt upstream, during a calibration phase, for example an experimental offline calibration phase. It is noted that the calibration is dependent on the camera/light-based marker chosen.

According to at least one embodiment, determining at least one adjustment parameter comprises determining both the shutter time of the camera and the light power intensity of the light sources.

Indeed, both shutter time and light power intensity can modify the blobs sizes.

According to at least one embodiment, determining at least one adjustment parameter comprises determining the shutter time of the camera and, once the shutter time is determined, determining the light power intensity of the light sources.

According to at least one embodiment, said shutter time is paired with at least one middle position of the light power intensity of said at least one light source in an allowed range of light power intensity.

In this way, the shutter time is chosen to optimize as much as possible the variability of the light power intensity.

The (next) pose estimate can thus be used to retrieve a pair of camera shutter time and light power intensity from the mapping.

In particular, the camera shutter time is directly correlated with the distance between the camera 11 and the marker 12. The light power intensity of the light sources of the marker can thus be adapted when the camera and/or the marker moves.

Referring again to Figure 2, in block 23, at least one marker is identified on at least one image obtained by said camera after adjusting at least one of the shutter time and the light power intensity according to said at least one adjustment parameter.

According to at least one embodiment, adjusting at least one of the shutter time and the light power intensity comprises transmitting data related to the shutter time to the camera 11. For example, the value of the adjustment parameter of the shutter time type is obtained by the processor *P*1 110 and applied to the camera 11. The value of the adjustment parameter of the shutter time type can thus be applied to the camera directly for the next frames.

According to at least one embodiment, adjusting at least one of the shutter time and the light power intensity comprises transmitting data related to the light power intensity of the light sources to the marker 12. For example, the value of the adjustment parameter of the light power intensity type is obtained by the processor *P*1 110, transmitted to the processor *P*2 120, and applied to the light sources of the marker 12. The light power intensity of each light source of the marker can be controlled independently.

The processor *P*1 is thus aware, in at least one embodiment, of both the shutter time of the camera 11 and the light power intensity of the light sources of the marker 12.

In particular, as the adjustment parameters are determined (in block 22) from an estimation of the pose of the camera at a future/next time (in bloc 21), the latency in adjusting the shutter time of the camera 11 or the light power intensity of the light sources of the marker 12, due to camera delays and network latency, can be reduced.

In addition, according to at least one embodiment, the light power intensity of the light sources of the marker 12 can be adapted when the camera 11 and/or the marker 12 moves. For example, the marker motion can be used to locally adapt the light sources power intensity, improving the robustness of the adaptation algorithm to fast marker motion along the camera optical axis.

With the adjustment of at least one of the shutter time of the camera 11 and the light power intensity of the light sources of the marker 12 according to said at least one adjustment parameter, according to at least one embodiment of the disclosure, the size of the blobs in the images captured by the camera is reduced, and the identification of the marker in the image, implemented in block 23, is more accurate.

According to at least one embodiment, it is noted that, through the calibration procedure, the image of the marker is obtained by the camera after adjusting at least one of the shutter time and the light power intensity, according to the adjustment parameter, is known by the processor *P1* 110. In this way, it is possible to process the images captured by the camera, before or after adjusting at least one of the shutter time and the light power intensity, to remove blobs with the wrong radius. Such technique removes almost all remaining outliers.

At the end of the first iteration, block 23 outputs an identified marker.

For example, such identified marker can be used to estimate an improved pose of the camera.

In particular, such identified marker can be used in a next iteration of the method for identifying at least one light-based marker, in order to estimate a pose of the camera in block 21. Such pose estimate can be an update or a refinement of the pose estimate estimated in block 21 at the previous iteration.

Several iterations can thus be implemented to update / refine the identification of the marker / the estimation of the camera pose. For example, the iteration stops when a stop condition is met, like a predefined number of iterations, optimal light condition, etc.

The present disclosure also pertains to a device for identifying at least one marker on images obtained by a camera, said at least one marker comprising light sources and said camera having a shutter time, wherein said device comprises at least one processor adapted and configured for:
- estimating a pose of the camera,
- determining at least one adjustment parameter among at least one of the shutter time and a light power intensity of at least one of said light sources, from the pose estimate,
- identifying said at least one marker on at least one image obtained by said camera after adjusting at least one of the shutter time and the light power intensity according to said at least one adjustment parameter.

Such a device can be especially adapted to implement the method for identifying at least one marker on images obtained by a camera described here above. It could of course comprise the different characteristics pertaining to the method according to an embodiment of the disclosure, which can be combined or taken separately. Thus, the characteristics and advantages of the device are the same as those of the method.

**Figure 3** schematically illustrates an example of a device for identifying at least one marker on images obtained by a camera according to an embodiment of the invention.

Such a device is for example implemented in a first apparatus, which comprises a camera. Only the main elements of the device are shown.

In an embodiment, a device for implementing the disclosed method comprises a non-volatile memory 33 (e.g. a read-only memory (ROM) or a hard disk), a volatile memory 31 (e.g. a random access memory or RAM) and at least one processor 32, for example the processor *P*1. The non-volatile memory 33 is a non-transitory computer-readable carrier medium. It stores executable program code instructions, which are executed by the processor 32 in order to enable implementation of the method described above in its various embodiments.

In particular, the processor 32 is adapted and configured to:
- estimate a pose of the camera,
- determine at least one adjustment parameter among at least one of the shutter time and a light power intensity of at least one of said light sources, from the pose estimate,
- identify said at least one marker on at least one image obtained by said camera after adjusting at least one of the shutter time and the light power intensity according to said at least one adjustment parameter.

Upon initialization, the aforementioned program code instructions are transferred from the non-volatile memory 33 to the volatile memory 31 so as to be executed by the processor 32. The volatile memory 31 likewise includes registers for storing the variables and parameters required for this execution.

The steps of the method for identifying at one light-based marker on images captured by a camera according to at least one embodiment of the disclosure may be implemented equally well:
- by the execution of a set of program code instructions executed by a reprogrammable computing machine such as a PC type apparatus, a DSP (digital signal processor) or a microcontroller. This program code instructions can be stored in a non-transitory computer-readable carrier medium that is detachable (for example a floppy disk, a CD-ROM or a DVD-ROM) or non-detachable; or
- by a dedicated machine or component, such as an FPGA (Field Programmable Gate Array), an ASIC (Application-Specific Integrated Circuit) or any dedicated hardware component.

In other words, the disclosure is not limited to a purely software-based implementation, in the form of computer program instructions, but that it may also be implemented in hardware form or any form combining a hardware portion and a software portion.

The flowchart and/or block diagrams in the Figures illustrate the configuration, operation and functionality of possible implementations of systems, methods and computer program products according to various embodiments of the present disclosure. In this regard, each block in the flowchart or block diagrams may represent a module, segment, or portion of code, which comprises one or more executable instructions for implementing the specified logical function(s).

It is also be noted that, in some alternative implementations, the functions noted in the block may occur out of the order noted in the figures. For example, two blocks shown in succession may, in fact, be executed substantially concurrently, or the blocks may sometimes be executed in the reverse order, or blocks may be executed in an alternative order, depending upon the functionality involved. It will also be noted that each block of the block diagrams and/or flowchart illustration, and combinations of the blocks in the block diagrams and/or flowchart illustration, can be implemented by special purpose hardware-based systems that perform the specified functions or acts, or combinations of special purpose hardware and computer instructions. While not explicitly described, the present embodiments may be employed in any combination or sub-combination.

At least one embodiment of the present disclosure also concerns a system comprising a first apparatus comprising a camera having a shutter time and a second apparatus comprising at least one marker comprising light sources,
wherein said first apparatus comprises a device for identifying said at least one marker on images obtained by said camera, said device comprising at least one processor adapted and configured to:
- estimate a pose of the camera,
- determine at least one adjustment parameter among at least one of the shutter time and a light power intensity of at least one of said light sources, from the pose estimate,
- identify said at least one marker on at least one image obtained by said camera after adjusting at least one of the shutter time and the light power intensity according to said at least one adjustment parameter;
and wherein said second apparatus comprises at least one processor adapted and configured to:
- receive data related to the light power intensity of said at least one light source,
- adjust the light power intensity of at least one of said light sources according to the received data.

The first apparatus can be especially adapted to implement the method for identifying at least one marker on images obtained by a camera described here above. The first apparatus can communicate with the second apparatus, and especially send to the second apparatus data related to the light power intensity of the light sources of the marker. In this way, the second apparatus can adjust the light power intensity of the light sources of the marker upon reception of data related to the light power intensity sent by the first apparatus.

Another aspect of the disclosure pertains to at least one computer program product downloadable from a communication network and/or recorded on a medium readable by computer and/or executable by a processor comprising software code adapted to perform a method for identifying at least one marker on images obtained by a camera, wherein the software code is adapted to perform at least one of the steps of the method described above.

In addition, the present disclosure concerns a non-transitory computer readable medium comprising a computer program product recorded thereon and capable of being run by a processor, including program code instructions for implementing the method for identifying at least one marker on images obtained by a camera previously described.

## Claims

1. A method for identifying at least one marker (12) on images obtained by a camera (11), said at least one marker comprising light sources and said camera having a shutter time,
wherein said method comprises:
- estimating (21) a pose of the camera,
- determining (22) at least one adjustment parameter among at least one of the shutter time and a light power intensity of at least one of said light sources, from the pose estimate,
- identifying (23) said at least one marker on at least one image obtained by said camera after adjusting at least one of the shutter time and the light power intensity according to said at least one adjustment parameter.

2. A device for identifying at least one marker (12) on images obtained by a camera (11), said at least one marker comprising light sources and said camera having a shutter time,
wherein said device comprises at least one processor (110) adapted and configured for:
- estimating (21) a pose of the camera,
- determining (22) at least one adjustment parameter among at least one of the shutter time and a light power intensity of at least one of said light sources, from the pose estimate,
- identifying (23) said at least one marker on at least one image obtained by said camera after adjusting at least one of the shutter time and the light power intensity according to said at least one adjustment parameter.

3. The method according to claim 1 or the device according to claim 2, wherein estimating (21) the pose of the camera comprises:
- obtaining at least one previous pose of the camera,
- predicting the movement of the camera with respect to said at least one marker,
- estimating the pose of the camera from the predicted movement and said at least one previous pose.

4. The method according to claim 3 or the device according to claim 3, wherein the predicted movement is predicted from at least two previous poses of the camera at respective distinct times.

5. The method according to claim 3 or the device according to claim 3, wherein the predicted movement is predicted from data collected by at least one inertial sensor.

6. The method according to any one of claims 1 or 3 to 5 or the device according to any of claims 2 to 5, wherein said at least one adjustment parameter is determined from a mapping between poses of the camera and adjustment parameters.

7. The method according to claim 6 or the device according to claim 6, comprising carrying out an upstream calibration providing said mapping.

8. The method according to any one of claims 1 or 3 to 7 or the device according to any of claims 2 to 7, wherein determining (22) at least one adjustment parameter comprises determining both the shutter time of said camera and the light power intensity of said at least one light source.

9. The method according to claim 8 or the device according to claim 8, wherein determining (22) at least one adjustment parameter comprises determining the shutter time of said camera and, once the shutter time is determined, determining the light power intensity of said at least one light source.

10. The method according to any one of claims 8 or 9 or the device according to any of claims 8 or 9, wherein said shutter time is paired with at least one middle position of the light power intensity of said at least one light source in an allowed range of light power intensity.

11. The method according to any one of claims 1, or 3 to 10, or the device according to any of claims 2 to 10 wherein adjusting at least one of the shutter time and the light power intensity comprises transmitting data related to the light power intensity of said at least one light source to the marker.

12. The method according to any one of claims 1 or 3 to 11 or the device according to any of claims 2 to 11, wherein adjusting at least one of the shutter time and the light power intensity comprises transmitting data related to the shutter time to the camera.

13. The method according to any one of claims 1 or 3 to 12 or the device of any of claims 3 to 12, further comprising estimating a new pose of the camera, from the identification of said at least one marker.

14. A system comprising a first apparatus comprising a camera (11) having a shutter time and a second apparatus comprising at least one marker (12) comprising light sources,
wherein said first apparatus comprises a device for identifying said at least one marker on images obtained by said camera, said device comprising at least one processor (110) adapted and configured to:
- estimate (21) a pose of the camera,
- determine (22) at least one adjustment parameter among at least one of the shutter time and a light power intensity of at least one of said light sources, from the pose estimate,
- identify (23) said at least one marker on at least one image obtained by said camera after adjusting at least one of the shutter time and the light power intensity according to said at least one adjustment parameter;
and wherein said second apparatus comprises at least one processor (120) adapted and configured to:
- receive data related to the light power intensity of said at least one light source,
- adjust the light power intensity of at least one of said light sources according to the received data.

15. A computer program product downloadable from a communication network and/or recorded on a medium readable by computer and/or executable by a processor comprising software code adapted to perform a method according to anyone of claims 1 or 3 to 13 when it is executed by a processor.
